# EUROPÄISCHE PATENTSCHRIFT

(11) **EP 3 126 716 B1**
(45) Veröffentlichungstag und Bekanntmachung des Hinweises auf die Patenterteilung: **16.05.2018**
(21) Anmeldenummer: 15716732.1
(22) Anmeldetag: 16.03.2015
(51) Int. Cl.: F16H 61/688, F16H 61/30, F16H 61/02

(54) **GETRIEBESTEUERUNG**
GEARBOX CONTROL SYSTEM
COMMANDE DE BOÎTE DE VITESSES

(30) Priorität: 01.04.2014 DE 102014206194
(43) Veröffentlichungstag der Anmeldung: 08.02.2017
(73) Patentinhaber: Schaeffler Technologies AG & Co. KG, 91074 Herzogenaurach (DE)
(72) Erfinder: GRETHEL, Marco, 77830 Bühlertal (DE); BAEHR, Markus, 77815 Bühl (DE)
(86) Internationale Anmeldenummer: PCT/DE2015/200162
(87) Internationale Veröffentlichungsnummer: WO 2015/149778

(56) Entgegenhaltungen:
- EP-A1- 2 664 826
- DE-A1- 19 900 852
- DE-A1-102008 009 653
- DE-A1-102011 102 277
- DE-B3-102013 000 157

## Beschreibung

Die Erfindung betrifft eine Getriebesteuerung zum fluidischen Betätigen eines Getriebes, das mehrere Gänge umfasst, die mit Hilfe einer Getriebeaktoreinrichtung gewählt und geschaltet werden können, und zum fluidischen Betätigen von zwei Teilkupplungen einer Doppelkupplung.

Aus der deutschen Offenlegungsschrift DE 10 2008 009 653 A1, welche alle Merkmale des Oberbegriffs des Anspruchs 1 offenbart, ist eine Hydraulikanordnung zur Steuerung eines Doppelkupplungsgetriebes eines Kraftfahrzeugs bekannt, die umfasst: Eine hydraulische Energiequelle zur Versorgung der Hydraulikanordnung mittels eines Hydraulikmediums mit hydraulischer Energie; einen Druckspeicher zur Speicherung der hydraulischen Energie; eine Kupplungskühlung zur Kühlung von Kupplungen des Doppelkupplungsgetriebes mittels des Hydraulikmediums; Kupplungsaktoren zum Betätigen einer ersten Kupplung und einer zweiten Kupplung, wobei die hydraulische Energiequelle eine zweiflutige Elektropumpe umfasst. Aus der deutschen Offenlegungsschrift DE 10 2010 047 801 A1 ist ein Hydrostataktor mit einem Geberzylinder enthaltend ein Gehäuse und einen in dem Gehäuse axial verlagerbaren, eine mit Druckmittel befüllte Druckkammer mit Druck beaufschlagenden Kolben, mit einem einen Drehantrieb in eine Axialbewegung wandelnden Planetenwälzgetriebe mit einer Hülse bekannt, wobei das Planetenwälzgetriebe durch einen Elektromotor angetrieben ist.

Aufgabe der Erfindung ist es, das fluidische Betätigen eines Getriebes, das mehrere Gänge umfasst, die mit Hilfe einer Getriebeaktoreinrichtung gewählt und geschaltet werden können, und das fluidische Betätigen von zwei Teilkupplungen einer Doppelkupplung, zu vereinfachen. Die Aufgabe ist bei einer Getriebesteuerung zum fluidischen Betätigen eines Getriebes, das mehrere Gänge umfasst, die mit Hilfe einer Getriebeaktoreinrichtung gewählt und geschaltet werden, und zum fluidischen Betätigen von zwei Teilkupplungen einer Doppelkupplung, dadurch gelöst, dass die Getriebesteuerung zwei Reversierpumpenaktoren umfasst, denen jeweils eine der Teilkupplungen und jeweils ein UND-Ventil zugeordnet ist und die jeweils zwei Anschlüsse aufweisen, wobei an den jeweiligen Anschlüssen des zugeordneten Reversierpumpenaktors das fluidisches UND-Ventil angeschlossen ist, das als dritten Anschluss einen Tankanschluss aufweist, wobei die Getriebeaktoreinrichtung über ein fluidisches ODER-Ventil an die zwei Reversierpumpenaktoren angeschlossen ist. Bei den Reversierpumpenaktoren handelt es sich vorzugsweise um Fluidpumpen, die in entgegengesetzten Förderrichtungen betrieben werden können. Bei den Fluidpumpen handelt es sich insbesondere um Hydraulikpumpen, die mit einem Hydraulikmedium, wie Hydrauliköl, betrieben werden. Die Hydraulikpumpen sind vorzugsweise in Verdrängerbauweise ausgeführt. Die Hydraulikpumpen können als Flügelzellenpumpe, Zahnradpumpe oder Kolbenpumpe ausgeführt sein. Zum Antrieb der Reversierpumpenaktoren werden vorteilhaft Elektromotoren verwendet. In einer ersten Förderrichtung können die Reversierpumpenaktoren zum Beispiel verwendet werden, um eine der Teilkupplungen zu betätigen, insbesondere zu schließen. In einer zweiten Förderrichtung können die Reversierpumpenaktoren zum Beispiel verwendet werden, um einen Getriebeaktor der Getriebeaktoreinrichtung zu betätigen. Dabei dient einer der Getriebeaktoren vorteilhaft zum Wählen eines Gangs des Getriebes. Der andere Getriebeaktor dient vorteilhaft zum Schalten des gewählten Gangs. Die Getriebeaktoren, die zum Ausführen einer Wähl- und/oder Schaltbewegung dienen, werden auch als Gangsteller bezeichnet. Die Teilkupplungen der Doppelkupplung können direkt oder indirekt betätigt werden. Die Teilkupplungen können nass- oder trockenlaufend ausgeführt sein. Durch die erfindungsgemäße Kombination der beiden Reversierpumpenaktoren in der Getriebesteuerung mit den beiden UND-Ventilen und dem ODER-Ventil kann die Getriebesteuerung erheblich vereinfacht werden. Die UND-Ventile werden auch als Zweidruckventile bezeichnet und ermöglichen besonders vorteilhaft drehrichtungsunabhängig unterschiedliche Getriebefunktionen. Die UND-Ventile sind jeweils den Pumpenanschlüssen der Reversierpumpenaktoren zugeordnet. Durch das ODER-Ventil wird auf einfache Art und Weise ermöglicht, dass der jeweilige Reversierpumpenaktor, der gerade nicht mit der Betätigung einer zugeordneten Teilkupplung beschäftigt ist, den zugehörigen Getriebeaktor der Getriebeaktoreinrichtung mit einem Förderstrom und einem Förderdruck versorgen kann.

Ein bevorzugtes Ausführungsbeispiel der Getriebesteuerung ist dadurch gekennzeichnet, dass die Getriebeaktoreinrichtung zum Darstellen der Schaltfunktion einen Schwenkaktor mit einer Rückstellfunktion umfasst. Zur Darstellung der Rückstellfunktion kann zum Beispiel eine Rückstellfedereinrichtung verwendet werden. Die Rückstellfedereinrichtung kann eine Rückstellfeder oder mehrere Rückstellfedern, zum Beispiel zwei Rückstellfedern, umfassen. Bei im Rahmen der vorliegenden Erfindung durchgeführten Untersuchungen wurde herausgefunden, dass es sich, insbesondere unter Dynamikgesichtspunkten, als vorteilhaft erweist, wenn der Schwenkaktor eine Rückstellfunktion aufweist.

Ein weiteres bevorzugtes Ausführungsbeispiel der Getriebesteuerung ist dadurch gekennzeichnet, dass die Getriebeaktoreinrichtung zum Darstellen der Wählfunktion einen einfach wirkenden Fluidzylinder mit einer Rückstellfunktion umfasst. Die Rückstellfunktion wird zum Beispiel mit einer Rückstellfedereinrichtung dargestellt. Die Rückstellfedereinrichtung umfasst zum Beispiel eine Rückstellfeder, durch welche der einfach wirkende Fluidzylinder in eine Ausgangsstellung vorgespannt wird. Der einfach wirkende Fluidzylinder ersetzt vorteilhaft einen doppelwirkenden Fluidzylinder. Dadurch kann die Komplexität einer benötigten Ventillogik erheblich reduziert werden. Die Rückstellfedereinrichtung zur Darstellung der Rückstellfunktion wirkt vorzugsweise in Richtung der Erdschwerkraft.

Ein weiteres bevorzugtes Ausführungsbeispiel der Getriebesteuerung ist dadurch gekennzeichnet, dass die Getriebeaktoreinrichtung einen Schaltaktor und einen Wählaktor umfasst, die durch eine gemeinsame Ventileinrichtung angesteuert sind. Bei dem Schaltaktor handelt es sich vorzugsweise um den vorab beschriebenen Schwenkaktor. Bei dem Wählaktor handelt es sich vorzugsweise um den vorab beschriebenen einfach wirkenden Fluidzylinder. Die gemeinsame Ventileinrichtung ist zum Beispiel als Wegeventil ausgeführt. Das Wegeventil kann als Längsschieberventil ausgeführt sein. Die gemeinsame Ventileinrichtung ist vorzugsweise in eine Mittelstellung vorgespannt, die zum Verstellen des Wählaktors dient.

Ein weiteres bevorzugtes Ausführungsbeispiel der Getriebesteuerung ist dadurch gekennzeichnet, dass die gemeinsame Ventileinrichtung als 6/3-Wegeventil mit einer Mittelstellung zum Verstellen des Wählaktors und zwei Stellungen zum Verstellen des Schaltaktors ausgeführt ist. Dadurch kann auf einfache Art und Weise mit nur einer gemeinsamen Ventileinrichtung die Wählfunktion und die Schaltfunktion der Getriebeaktoreinrichtung dargestellt werden. Ein weiteres bevorzugtes Ausführungsbeispiel der Getriebesteuerung ist dadurch gekennzeichnet, dass die gemeinsame Ventileinrichtung als 6/5-Wegeventil mit einer Mittelstellung zum Verstellen des Wählaktors, zwei Stellungen zum Verstellen des Schaltaktors und zwei Zwischenstellungen ausgeführt ist. Die Zwischenstellungen ermöglichen auf einfache Art und Weise ein passives Zurücklaufen einer Schaltstange der Getriebeaktoreinrichtung in ihre Ruheposition. Bei einem Wechsel zwischen der Mittelstellung und den Stellungen zum Verstellen des Schaltaktors werden die Zwischenstellungen hochdynamisch durchlaufen, so dass eine eingeregelte Wählposition der Getriebeaktoreinrichtung nicht verlassen wird.

Ein weiteres bevorzugtes Ausführungsbeispiel der Getriebesteuerung ist dadurch gekennzeichnet, dass die gemeinsame Ventileinrichtung direkt durch einen Elektromagneten betätigt wird. Das hat sich im Hinblick auf die Ventillogik der gemeinsamen Ventileinrichtung als vorteilhaft erwiesen.

Ein weiteres bevorzugtes Ausführungsbeispiel der Getriebesteuerung ist dadurch gekennzeichnet, dass die gemeinsame Ventileinrichtung über ein Vorsteuerventil betätigt wird. Bei dem Vorsteuerventil handelt es sich zum Beispiel um ein als Proportionalventil ausgeführtes 2/2-Wegeventil, das zum Beispiel elektromagnetisch angesteuert wird.

Ein weiteres bevorzugtes Ausführungsbeispiel der Getriebesteuerung ist dadurch gekennzeichnet, dass die gemeinsame Ventileinrichtung als Drehschieberventil ausgeführt ist. Das hat sich im Hinblick auf die Schaltdynamik der gemeinsamen Ventileinrichtung als vorteilhaft erwiesen.

Ein weiteres bevorzugtes Ausführungsbeispiel der Getriebesteuerung ist dadurch gekennzeichnet, dass die gemeinsame Ventileinrichtung durch einen Drehantrieb angesteuert ist. Bei dem Drehantrieb der als Drehschieberventil ausgeführten gemeinsamen Ventileinrichtung handelt es sich zum Beispiel um einen Schrittmotor.

Ein weiteres bevorzugtes Ausführungsbeispiel der Getriebesteuerung ist dadurch gekennzeichnet, dass die Getriebeaktoreinrichtung einen Schaltaktor und einen Wählaktor umfasst, die durch zwei baugleiche Proportional-Wegeventile angesteuert sind. Dadurch kann der Herstellaufwand weiter reduziert werden. Die baugleichen Proportional-Wegeventile sind zum Beispiel als 4/3-Wegeventile ausgeführt und werden vorzugsweise elektromagnetisch betätigt.

Ein weiteres bevorzugtes Ausführungsbeispiel der Getriebesteuerung ist dadurch gekennzeichnet, dass die Getriebeaktoreinrichtung einen Schaltaktor und einen Wählaktor umfasst, die durch zwei baugleiche Schaltventile angesteuert sind. Dadurch kann der Herstellaufwand weiter reduziert werden. Die beiden baugleichen Schaltventile sind zum Beispiel als 4/2-Wegeventile ausgeführt.

Die Erfindung betrifft gegebenenfalls auch ein Verfahren zum fluidischen Betätigen eines Getriebes, das mehrere Gänge umfasst, die mit Hilfe einer Getriebeaktoreinrichtung gewählt und geschaltet werden können, und zum fluidischen Betätigen von zwei Teilkupplungen einer Doppelkupplung mit einer vorab beschriebenen Getriebesteuerung.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine vereinfachte Darstellung einer erfindungsgemäßen Getriebesteuerung mit zwei Reversierpumpenaktoren, die zur Betätigung einer Doppelkupplung und einer Getriebeaktoreinrichtung dienen;
Figur 2A und 2B eine vereinfachte Darstellung eines Schwenkaktors mit zwei Rückstellfedern zur Darstellung einer Rückstellfunktion;
Figur 3A und 3B einen ähnlichen Schwenkaktor wie in Figur 2 mit nur einer Rückstellfeder zur Darstellung der Rückstellfunktion;
Figur 4 eine ähnliche Darstellung wie in Figur 1 mit einem Schwenkaktor zur Darstellung der Schaltfunktion und einem doppelwirkenden Fluidzylinder zur Darstellung der Wählfunktion des Getriebes;
Figur 5 einen Ausschnitt aus Figur 4 mit einem einfachwirkenden Fluidzylinder zur Darstellung der Wählfunktion des Getriebes und mit einer gemeinsamen Ventileinrichtung zum Ansteuern der Getriebeaktoreinrichtung mit den beiden Getriebeaktoren;
Figur 6 die gleiche Darstellung wie in Figur 5 mit einer anderen gemeinsamen Ventileinrichtung;
Figur 7 die gemeinsame Ventileinrichtung aus Figur 6 alleine mit Ansteuersymbolen;
Figur 8 die gemeinsame Ventileinrichtung aus Figur 6 alleine mit einem Vorsteuerventil;
Figur 9 eine Ausführung der gemeinsamen Ventileinrichtung aus Figur 6 als Drehschieberventil und
Figur 10 eine ähnliche Darstellung wie in Figur 5 mit zwei baugleichen Schaltventilen anstelle der gemeinsamen Ventileinrichtung.

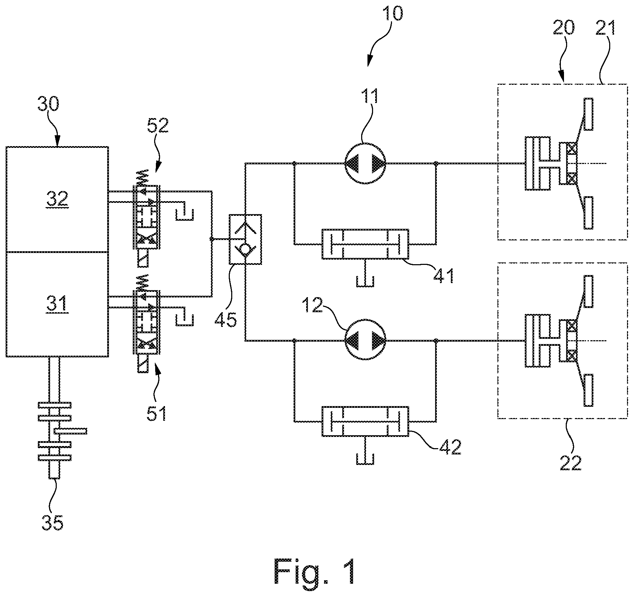

In Figur 1 ist eine Getriebesteuerung 10 mit einem ersten Reversierpumpenaktor 11 und einem zweiten Reversierpumpenaktor 12 vereinfacht dargestellt. Bei den Reversierpumpenaktoren 11 und 12 handelt es sich um Fluidpumpen, die, wie durch Pfeilsymbole angedeutet ist, in entgegengesetzten Förderrichtungen betreibbar sind. Die Reversierpumpenaktoren 11 und 12 ermöglichen auf besonders vorteilhafte Art und Weise die Betätigung einer Doppelkupplung 20 und einer Getriebeaktoreinrichtung 30.

Die Doppelkupplung 20 umfasst eine erste Teilkupplung 21 und eine zweite Teilkupplung 22. Die erste Teilkupplung 21 der Doppelkupplung 20 ist durch den ersten Reversierpumpenaktor 11 betätigbar. Die zweite Teilkupplung 22 der Doppelkupplung 20 ist durch den zweiten Reversierpumpenaktor 12 betätigbar.

Die Getriebeaktoreinrichtung 30 umfasst einen ersten Getriebeaktor 31 und einen zweiten Getriebeaktor 32. Der erste Getriebeaktor 31 dient zur Darstellung einer Wählfunktion des Getriebes und wird daher auch als Wählaktor bezeichnet. Der zweite Getriebeaktor 32 dient vorzugsweise zur Darstellung einer Schaltfunktion des Getriebes und wird daher auch als Schaltaktor bezeichnet. Eine Schaltwelle 35 erstreckt sich von der Getriebeaktoreinrichtung 30 in vertikaler Richtung nach unten.

Den beiden Reversierpumpenaktoren 11, 12 ist jeweils ein UND-Ventil 41, 42 zugeordnet. Das UND-Ventil 41, 42 wird auch als Zweidruckventil bezeichnet und hat zwei Anschlüsse, mit denen das UND-Ventil 41, 42 an die jeweiligen Anschlüsse des zugeordneten Reversierpumpenaktors 11, 12 angeschlossen ist. Als dritten Anschluss umfasst das UND-Ventil 41, 42 einen Tankanschluss.

Durch das UND-Ventil 41, 42 oder Zweidruckventil wird auf einfache Art und Weise ermöglicht, dass mit den Reversierpumpenaktoren 11, 12 drehrichtungsunabhängig unterschiedliche Getriebefunktionen dargestellt werden können. Die Getriebeaktoreinrichtung 30 ist über ein ODER-Ventil 45 mit den beiden Reversierpumpenaktoren 11, 12 gekoppelt. Das liefert unter anderem den Vorteil, dass der Reversierpumpenaktor 11, 12, der gerade nicht mit der Betätigung seiner zugeordneten Kupplung 21, 22 beschäftigt ist, den zugeordneten Getriebeaktor 32, 31 mit einem Förderstrom und einem Förderdruck versorgen kann.

Zwischen das ODER-Ventil 45 und die Getriebeaktoreinrichtung 30 sind zwei Proportional-Wegeventile 51, 52 geschaltet. Die beiden Proportional-Wegeventile 51, 52 sind als 4/3-Wegeventile ausgeführt und werden elektromagnetisch betätigt. Durch eine symbolisch dargestellte Federeinrichtung sind die beiden Proportional-Wegeventile 51, 52 in ihre dargestellten Schaltstellungen vorgespannt. Das Proportional-Wegeventil 51 ist dem Wählaktor 31 zugeordnet. Das Proportional-Wegeventil 52 ist dem Schaltaktor 32 zugeordnet.

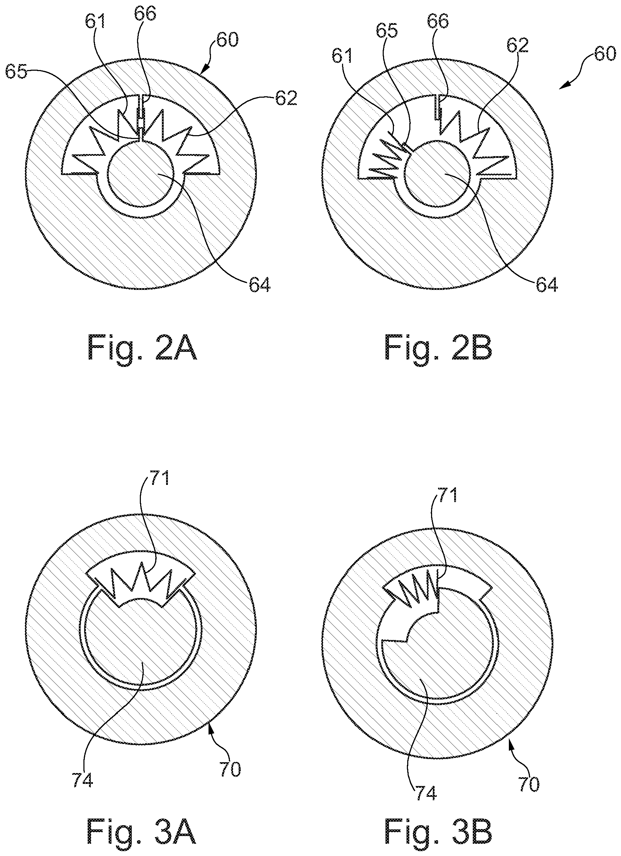

In den Figuren 2 und 3 ist vereinfacht dargestellt, wie der Schaltaktor 32 aus Figur 1 ausgeführt sein kann. Der Schaltaktor ist in den Figuren 2 und 3 als Schwenkaktor 60; 70 ausgeführt. Der Schwenkaktor 60; 70 hat eine Rückstellfunktion. In Figur 2A; 3A ist der Schwenkaktor 60; 70 in seiner entspannten Stellung dargestellt. In den Figuren 2B; 3B ist der Schwenkaktor 60; 70 in seiner gespannten Stellung gezeigt.

Zur Darstellung der Rückstellfunktion umfasst der Schwenkaktor 60 in Figur 2 zwei Rückstellfedern 61, 62. Der Schwenkaktor 60 umfasst einen Schwenkkörper 64 mit einem Schwenkflügel 65. Der Schwenkflügel 65 mit dem Schwenkkörper 64 ist relativ zu einem Festflügel 66 bewegbar, der an einem feststehenden Gehäuseteil des Schwenkaktors 60 befestigt ist.

In Figur 2B sieht man, dass die Rückstellfeder 61 komprimiert wird, wenn der Schwenkkörper 64 mit dem Schwenkflügel 65 relativ zu dem Festflügel 66 gegen den Uhrzeigersinn verdreht wird.

Der in Figur 3 dargestellte Schwenkaktor 70 umfasst im Unterschied zum vorangegangenen Ausführungsbeispiel nur eine Rückstellfeder 71. Ein Schwenkkörper 74 ist in einem feststehenden Gehäuseteil des Schwenkaktors 70 im Uhrzeigersinn und gegen den Uhrzeigersinn verschwenkbar. Dabei wird die Rückstellfeder 71 komprimiert, wie man in Figur 3B sieht.

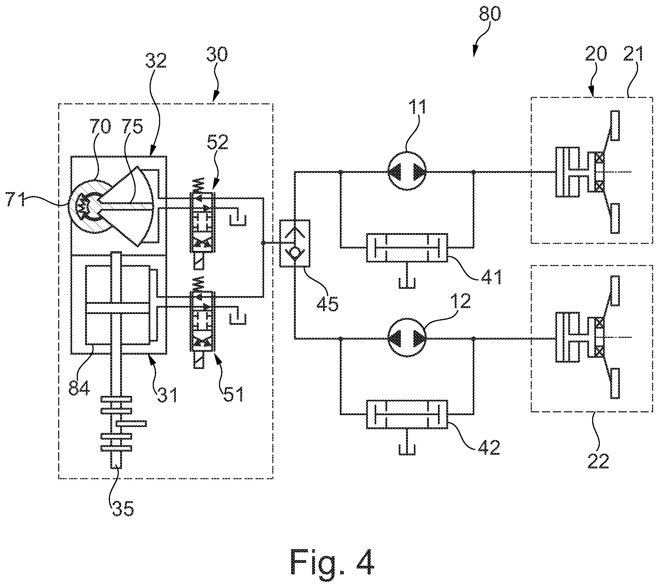

In Figur 4 sieht man, dass der den Schaltaktor 32 darstellende Schwenkaktor 70 über einen Schwenkflügel 75 fluidisch betätigbar ist. Über das Proportional-Wegeventil 52 kann der Schwenkflügel 75 des Schwenkaktors 70 durch den Reversierpumpenaktor 11 entweder von oben oder von unten mit Fluiddruck beaufschlagt werden. Dadurch kann die Schaltwelle 35 zur Darstellung der Schaltbewegung entsprechend verdreht werden.

In Figur 4 ist eine Getriebesteuerung 80 dargestellt, die im Wesentlichen der Darstellung der Figur 1 entspricht. Der Wählaktor 31 der Getriebeaktoreinrichtung 30 ist als doppeltwirkender Fluidzylinder 84 ausgeführt. Der doppeltwirkende Fluidzylinder 84 wird zum Gangwählen über das Proportional-Wegeventil 51 durch den Reversierpumpenaktor 12 mit Fluiddruck beaufschlagt.

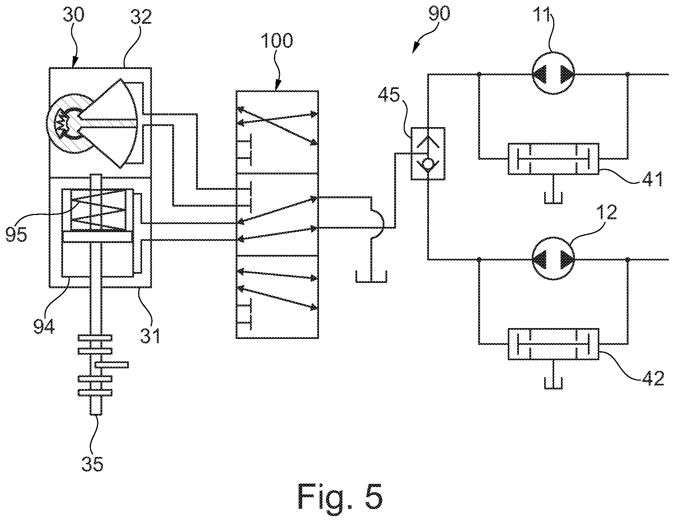

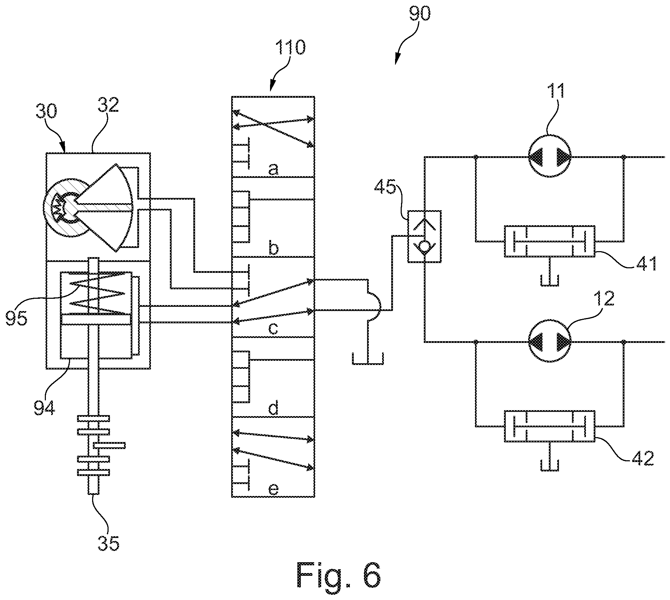

In den Figuren 5 und 6 sind Getriebesteuerungen 90 dargestellt, in denen die beiden Proportional-Wegeventile 51, 52 durch eine gemeinsame Ventileinrichtung 100; 110 ersetzt werden. In diesem Zusammenhang wird auch der doppeltwirkende Fluidzylinder 84 in den Figuren 5 und 6 durch einen einfachwirkenden Fluidzylinder 94 ersetzt. Der einfachwirkende Fluidzylinder 94 dient zur Darstellung der Wählfunktion und ist mit einer Rückstellfeder 95 ausgestattet. Dadurch kann die Komplexität der notwendigen Ventillogik erheblich reduziert werden. Die Rückstellfeder 95 wirkt in dem einfachwirkenden Fluidzylinder 94 in Richtung der Erdschwerkraft.

Bei der in Figur 5 dargestellten gemeinsamen Ventileinrichtung 100 handelt es sich um ein 6/3-Wegeventil mit einer Mittelstellung zum Verstellen des Wählaktors 31 und zwei Stellungen zum Verstellen des Schaltaktors 32. In seiner dargestellten Mittelstellung ist der einfachwirkende Fluidzylinder 94 auf beiden Seiten von Druck entlastet. Die Rückstellfeder 95 wirkt zusammen mit der Erdschwerkraft auf die Schaltwelle 35. Dadurch wird die Ansteuerung des einfachwirkenden Fluidzylinders 94 über die bidirektional betriebene Hydraulikpumpe, die den Reversierpumpenaktor 12 darstellt, vereinfacht.

Die in Figur 6 dargestellte gemeinsame Ventileinrichtung 110 ist als 6/5-Wegeventil mit einer Mittelstellung c, zwei Stellungen a und e zum Verstellen des Schaltaktors 32 und zwei Zwischenstellungen b und d ausgeführt. Die Zwischenstellungen b und d dienen dem passiven Zurücklaufen der Schaltstange 35 in ihre Ruheposition. Beim Wechsel zwischen Wählen und Schalten werden die Zwischenstellungen b und d hochdynamisch durchlaufen, so dass die eingeregelte Wählposition nicht verlassen wird.

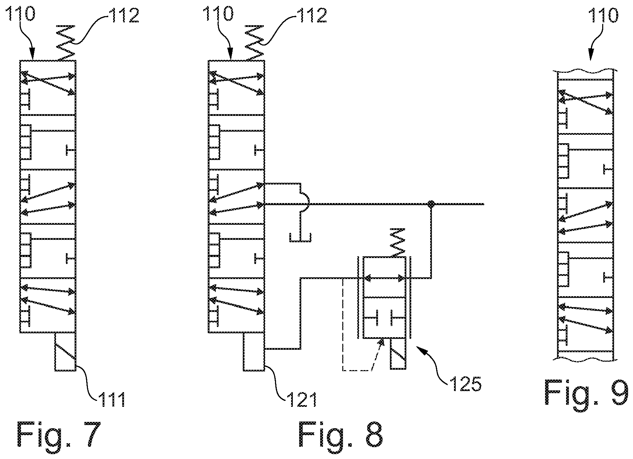

In Figur 7 ist mit Hilfe von Symbolen 111 und 112 angedeutet, dass die gemeinsame Ventileinrichtung 110 aus Figur 6 direkt elektromagnetisch angesteuert werden kann. Durch eine symbolisch angedeutete Feder 112 ist die gemeinsame Ventileinrichtung 110 in ihre in Figur 6 mit c bezeichnete Mittelstellung vorgespannt. Das Symbol 111 stellt zum Beispiel einen direkt auf die Ventillogik wirkenden Elektromagneten dar.

In Figur 8 ist mit Hilfe von Symbolen 121 und 122 dargestellt, dass die gemeinsame Ventileinrichtung 110 auch durch ein Vorsteuerventil 125 fluidisch angesteuert werden kann. Bei dem Vorsteuerventil 125 handelt es sich um ein Proportional-Wegeventil mit einer Öffnungsstellung und einer Schließstellung. Das Vorsteuerventil 125 wird elektromagnetisch angesteuert und ist in seine dargestellte Öffnungsstellung vorgespannt.

In Figur 9 ist dargestellt, dass die gemeinsame Ventileinrichtung 110 auch als Drehschieberventil ausgeführt sein kann. Der Antrieb des Drehschieberventils erfolgt über einen drehfähigen Antrieb, zum Beispiel über einen Schrittmotor.

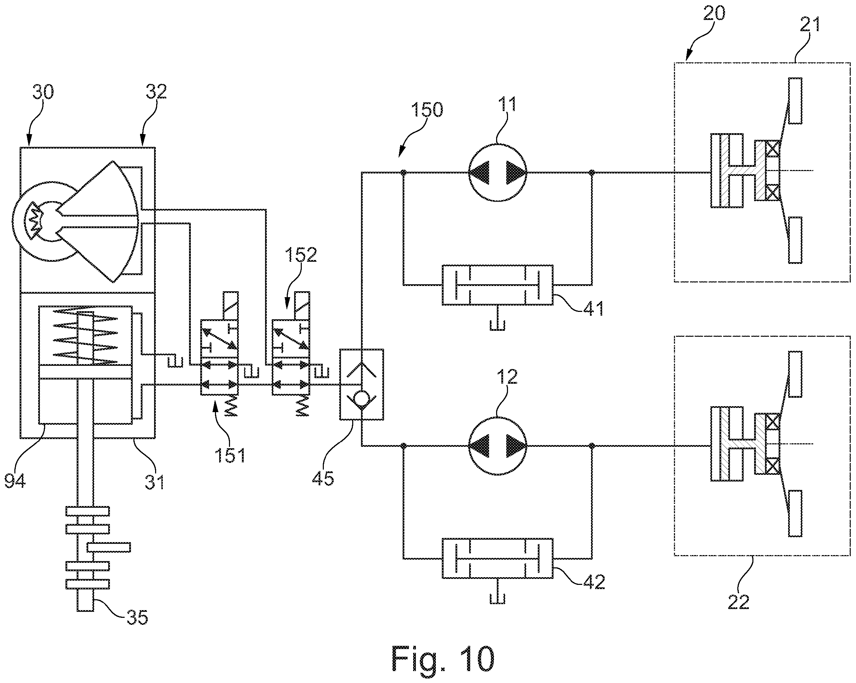

In Figur 10 ist eine Getriebesteuerung 150 dargestellt, die der Getriebesteuerung 90 in Figur 5 ähnelt. Im Unterschied zu Figur 5 wurde die gemeinsame Ventileinrichtung (100 in Figur 5) in Figur 10 durch zwei baugleiche Schaltventile 151, 152 ersetzt.

Die beiden baugleichen Schaltventile 151, 152 sind als 4/2-Wegeventile ausgeführt. Die beiden Schaltventile 151, 152 werden elektromagnetisch betätigt, wie durch ein entsprechendes Symbol angedeutet ist. Durch Federsymbole ist angedeutet, dass die beiden baugleichen Schaltventile 151, 152 in ihre in Figur 10 dargestellte Normalstellung vorgespannt sind.

Sind beide Schaltventile 151, 152, wie dargestellt, in ihrer Normalstellung, so ist die jeweilige Volumenstromquelle, also der jeweilige Reversierpumpenaktor 11,12, mit dem einfach wirkenden Fluidzylinder 94 verbunden, der auch als Wähl-Kolben bezeichnet wird.

Wird eines der Schaltventile 151, 152 betätigt, so wird der jeweilige auch als Pumpe bezeichnete Reversierpumpenaktor 11, 12 mit jeweils einer Seite des Getriebeaktors 32 mit dem Schwenkkörper beziehungsweise Schwenkkolben verbunden. Für jede Drehrichtung ist ein Schaltventil 151, 152 vorgesehen.

Die in Figur 10 dargestellte Getriebesteuerung 150 hat zum einen den Vorteil, dass zwei relativ einfache, baugleiche Schaltventile 151, 152 verwendet werden. Darüber hinaus können auch bei Ausfall eines der Schaltventile 151, 152 in beiden Teilgetrieben noch Gänge geschaltet werden. Die Ansteuerung der Wähl- und Schaltpositionen erfolgt über eine Feinsteuerung des jeweiligen Reversierpumpenaktors 11, 12.

### Bezugszeichenliste

10 Getriebesteuerung
11 Reversierpumpenaktor
12 Reversierpumpenaktor
20 Doppelkupplung
21 Teilkupplung
22 Teilkupplung
30 Getriebeaktoreinrichtung
31 Getriebeaktor
32 Getriebeaktor
35 Schaltwelle
41 UND-Ventil
42 UND-Ventil
45 ODER-Ventil
51 Proportional-Wegeventil
52 Proportional-Wegeventil
60 Schwenkaktor
61 Rückschlagfeder
62 Rückschlagfeder
64 Schwenkkörper
65 Schwenkflügel
66 Festflügel
70 Schwenkaktor
71 Rückstellfeder
74 Schwenkkörper
75 Schwenkflügel
80 Getriebesteuerung
84 Doppeltwirkender Fluidzylinder
90 Getriebesteuerung
94 Einfachwirkender Fluidzylinder
95 Rückstellfeder
100 gemeinsame Ventileinrichtung
110 gemeinsame Ventileinrichtung
111 Symbol
112 Symbol
121 Symbol
122 Symbol
125 Vorsteuerventil
150 Getriebesteuerung
151 Schaltventil
152 Schaltventil

## Patentansprüche

1. Getriebesteuerung (10;80;90) zum fluidischen Betätigen eines Getriebes, das mehrere Gänge umfasst, die mit Hilfe einer Getriebeaktoreinrichtung (30) gewählt und geschaltet werden, und zum fluidischen Betätigen von zwei Teilkupplungen (21,22) einer Doppelkupplung (20), **dadurch gekennzeichnet, dass** die Getriebesteuerung (10;80;90) zwei Reversierpumpenaktoren (11,12) umfasst, denen jeweils eine der Teilkupplungen (21,22) und jeweils ein UND-Ventil (41, 42) zugeordnet ist und die jeweils zwei Anschlüsse aufweisen, wobei an den jeweiligen Anschlüssen des zugeordneten Reversierpumpenaktors (11, 12) das fluidische UND-Ventil (41,42) angeschlossen ist, das als dritten Anschluss einen Tankanschluss aufweist, wobei die Getriebeaktoreinrichtung (30) über ein fluidisches ODER-Ventil (45) an die zwei Reversierpumpenaktoren (11,12) angeschlossen ist.

2. Getriebesteuerung nach Anspruch 1, **dadurch gekennzeichnet, dass** die Getriebeaktoreinrichtung (30) zum Darstellen der Schaltfunktion einen Schwenkaktor (70) mit einer Rückstellfunktion umfasst.

3. Getriebesteuerung nach einem der vorhergehenden Ansprüche, **dadurch gekennzeichnet, dass** die Getriebeaktoreinrichtung (30) zum Darstellen der Wählfunktion einen einfachwirkenden Fluidzylinder (94) mit einer Rückstellfunktion umfasst.

4. Getriebesteuerung nach einem der vorhergehenden Ansprüche, **dadurch gekennzeichnet, dass** die Getriebeaktoreinrichtung (30) einen Schaltaktor (32) und einen Wählaktor (31) umfasst, die durch eine gemeinsame Ventileinrichtung (100;110) angesteuert sind.

5. Getriebesteuerung nach Anspruch 4, **dadurch gekennzeichnet, dass** die gemeinsame Ventileinrichtung (100) als 6/3-Wegeventil mit einer Mittelstellung zum Verstellen des Wählaktors (31) und zwei Stellungen zum Verstellen des Schaltaktors (32) ausgeführt ist.

6. Getriebesteuerung nach Anspruch 4, **dadurch gekennzeichnet, dass** die gemeinsame Ventileinrichtung (110) als 6/5-Wegeventil mit einer Mittelstellung (c) zum Verstellen des Wählaktors (31), zwei Stellungen (a,e) zum Verstellen des Schaltaktors (32) und zwei Zwischenstellungen (b,d) ausgeführt ist.

7. Getriebesteuerung nach einem der Ansprüche 4 bis 6, **dadurch gekennzeichnet, dass** die gemeinsame Ventileinrichtung (100; 110) direkt durch einen Elektromagneten betätigt wird.

8. Getriebesteuerung nach einem der Ansprüche 4 bis 6, **dadurch gekennzeichnet, dass** die gemeinsame Ventileinrichtung (100;110) über ein Vorsteuerventil (125) betätigt wird.

9. Getriebesteuerung nach einem der Ansprüche 4 bis 8, **dadurch gekennzeichnet, dass** die gemeinsame Ventileinrichtung (100;110) als Drehschieberventil ausgeführt ist.

10. Getriebesteuerung nach Anspruch 9, **dadurch gekennzeichnet, dass** die gemeinsame Ventileinrichtung (100;110) durch einen Drehantrieb angesteuert ist.

11. Getriebesteuerung nach einem der Ansprüche 1 bis 3, **dadurch gekennzeichnet, dass** die Getriebeaktoreinrichtung (30) einen Schaltaktor (32) und einen Wählaktor (31) umfasst, die durch zwei baugleiche Proportional-Wegeventile (52;51) angesteuert sind.

12. Getriebesteuerung nach einem der Ansprüche 1 bis 3, **dadurch gekennzeichnet, dass** die Getriebeaktoreinrichtung (30) einen Schaltaktor (32) und einen Wählaktor (31) umfasst, die durch zwei baugleiche Schaltventile (152; 151) angesteuert sind.

## Claims

1. Transmission controller (10; 80; 90) for the fluidic actuation of a transmission which comprises a plurality of gears which are selected and shifted with the aid of a transmission actuator device (30), and for the fluidic actuation of two sub-clutches (21, 22) of a double clutch (20), **characterized in that** the transmission controller (10; 80; 90) comprises two reversing pump actuators (11, 12), to which in each case one of the sub-clutches (21, 22) and in each case one AND valve (41, 42) are assigned, and which reversing pump actuators (11, 12) have in each case two connectors, the fluidic AND valve (41, 42) being connected to the respective connectors of the associated reversing pump actuator (11, 12), which fluidic AND valve (41, 42) has a tank connector as a third connector, the transmission actuator device (30) being connected via a fluidic OR valve (45) to the two reversing pump actuators (11, 12).

2. Transmission controller according to Claim 1, **characterized in that** the transmission actuator device (30) comprises a swivel gear actuator (70) with a restoring function in order to provide the shifting function.

3. Transmission controller according to either of the preceding claims, **characterized in that** the transmission actuator device (30) comprises a single-acting fluid cylinder (94) with a restoring function in order to provide the selecting function.

4. Transmission controller according to one of the preceding claims, **characterized in that** the transmission actuator device (30) comprises a shifting actuator (32) and a selecting actuator (31) which are actuated by way of a common valve device (100; 110).

5. Transmission controller according to Claim 4, **characterized in that** the common valve device (100) is configured as a 6/3-way valve with a middle position for adjusting the selecting actuator (31) and two positions for adjusting the shifting actuator (32).

6. Transmission controller according to Claim 4, **characterized in that** the common valve device (110) is configured as a 6/5-way valve with a middle position (c) for adjusting the selecting actuator (31), two positions (a, e) for adjusting the shifting actuator (32) and two intermediate positions (b, d).

7. Transmission controller according to one of Claims 4 to 6, **characterized in that** the common valve device (100; 110) is actuated directly by way of an electromagnet.

8. Transmission controller according to one of Claims 4 to 6, **characterized in that** the common valve device (100; 110) is actuated via a pilot control valve (125).

9. Transmission controller according to one of Claims 4 to 8, **characterized in that** the common valve device (100; 110) is configured as a rotary slide valve.

10. Transmission controller according to Claim 9, **characterized in that** the common valve device (100; 110) is actuated by way of a rotary drive.

11. Transmission controller according to one of Claims 1 to 3, **characterized in that** the transmission actuator device (30) comprises a shifting actuator (32) and a selecting actuator (31) which are actuated by way of two structurally identical proportional directional valves (52; 51).

12. Transmission controller according to one of Claims 1 to 3, **characterized in that** the transmission actuator device (30) comprises a shifting actuator (32) and a selecting actuator (31) which are actuated by way of two structurally identical shifting valves (152; 151).

## Revendications

1. Commande de transmission (10; 80; 90) servant à actionner hydrauliquement une transmission qui présente plusieurs rapports qui sont sélectionnés et branchés à l'aide d'un dispositif (30) d'actionneur de transmission et à actionner hydrauliquement deux embrayages partiels (21, 22) d'un double embrayage (20),
**caractérisée en ce que**
la commande de transmission (10; 80; 90) comporte deux actionneurs (11, 12) à pompe réversible à chacun desquels est associé l'un des embrayages partiels (21, 22) ainsi qu'une soupape ET (41, 42) et qui présente deux raccordements, la soupape hydraulique ET (41, 42) qui présente comme troisième raccordement un raccordement à une cuve étant raccordée aux différents raccordements de l'actionneur (11, 12) à pompe réversible associé, le dispositif (30) d'actionneur de transmission étant raccordé aux deux raccordements de l'actionneur (11, 12) à pompe réversible par une soupape hydraulique OU (45).

2. Commande de transmission selon la revendication 1, **caractérisée en ce que** le dispositif (30) d'actionneur de transmission comporte un actionneur pivotant (70) à fonction de rappel pour représenter la fonction de branchement.

3. Commande de transmission selon l'une des revendications précédentes, **caractérisée en ce que** le dispositif (30) d'actionneur de transmission comporte un vérin hydraulique (94) à simple action et doté d'une fonction de rappel pour représenter la fonction de sélection.

4. Commande de transmission selon l'une des revendications précédentes, **caractérisée en ce que** le dispositif (30) d'actionneur de transmission comporte un actionneur de branchement (32) et un actionneur de sélection (31) qui sont commandés par un dispositif de soupape (100; 110) commun.

5. Commande de transmission selon la revendication 4, **caractérisée en ce que** le dispositif (100) à soupape commune est configuré comme soupape à 6/3 voies dotée d'une position centrale permettant d'agir sur l'actionneur de sélection (31) et de deux positions permettant d'agir sur l'actionneur de branchement (32).

6. Commande de transmission selon la revendication 4, **caractérisée en ce que** le dispositif de soupape (110) commun est configuré comme soupape à 6/5 voies présentant une position centrale (c) permettant d'agir sur l'actionneur de sélection (31), deux positions (a, e) permettant d'agir sur l'actionneur de branchement (32) et deux positions intermédiaires (b, d).

7. Commande de transmission selon l'une des revendications 4 à 6, **caractérisée en ce que** le dispositif de soupape (100; 110) commun est actionné directement par un électro-aimant.

8. Commande de transmission selon l'une des revendications 4 à 6, **caractérisée en ce que** le dispositif de soupape (100; 110) commun est actionné directement par une soupape (125) de précommande.

9. Commande de transmission selon l'une des revendications 4 à 8, **caractérisée en ce que** le dispositif de soupape (100; 110) commun est configuré comme soupape à coulisseau rotatif.

10. Commande de transmission selon la revendication 9, **caractérisée en ce que** le dispositif de soupape (100; 110) commun est commandé par un entraînement en rotation.

11. Commande de transmission selon l'une des revendications 1 à 3, **caractérisée en ce que** le dispositif (30) d'actionneur de transmission comporte un actionneur de branchement (32) et un actionneur de sélection (31) qui sont commandés par deux soupapes proportionnelles (52; 51) de même structure.

12. Commande de transmission selon l'une des revendications 1 à 3, **caractérisée en ce que** le dispositif (30) d'actionneur de transmission comporte un actionneur de branchement (32) et un actionneur de sélection (31) qui sont commandés par deux soupapes de branchement (152; 151) de même structure.
